# EUROPÄISCHE PATENTSCHRIFT

(11) **EP 0 603 203 B1**
(45) Veröffentlichungstag und Bekanntmachung des Hinweises auf die Patenterteilung: **02.11.1995**
(21) Anmeldenummer: 92916540.5
(22) Anmeldetag: 06.08.1992
(51) Int. Cl.: A61C 1/05

(54) **ZAHNÄRZTLICHES HANDSTÜCK**
MEDICAL DENTISTRY HANDPIECE
PIECE A MAIN UTILISEE EN MEDECINE DENTAIRE

(30) Priorität: 13.09.1991 AT 1838/91
(43) Veröffentlichungstag der Anmeldung: 29.06.1994
(73) Patentinhaber: IMTEC INNOVATIVE MEDIZINTECHNIK GESELLSCHAFT M.B.H., A-5400 Hallein (AT)
(72) Erfinder: ROSENSTATTER, Otto, A-5164 Seeham (AT)
(74) Vertreter: Torggler, Paul, Dr.
(86) Internationale Anmeldenummer: AT9200108
(87) Internationale Veröffentlichungsnummer: WO9305722

(56) Entgegenhaltungen:
- DE-A- 3 930 114
- FR-A- 2 325 353
- FR-A- 2 402 443
- FR-A- 2 448 341
- GB-A- 2 072 779

## Beschreibung

Die Erfindung bezieht sich auf ein zahnärztliches Handstück bestehend aus einem Griffteil, mit dem wahlweise verschiedene Halsteile verbindbar sind, welche Kopfteile zur Aufnahme von Werkzeugen tragen, wobei durch den Griffteil mindestens eine Kühlmittelleitung geführt ist.

Es ist bekannt, derartige Handstücke so auszubilden, daß ein Griffteil mit verschiedenen Halsteilen verbunden werden kann. Dabei ist jedoch immer vorgesehen, daß die durch den Griffteil geführten Kühlmittelleitungen, die in der Trennfläche von Griffteil und Halsteil enden, im Halsteil fortgesetzt werden (vgl. AT-A-359 632, AT-A-370 979).

Aufgabe der Erfindung ist es demgegenüber ein zahnärztliches Handstück zu schaffen, dessen Griffteil möglichst universell verwendbar ist. In diesem Sinne ist erfindungsgemäß vorgesehen, daß der Halsteil mit mindestens einem Ansatz zum Verschließen oder Öffnen einer den Griffteil durchsetzenden Kühlmittelleitung versehen ist.

In einer Ausführungsform der Erfindung ist vorgesehen, daß der erfindungsgemäß am Halsteil vorgesehene Ansatz eine im Normalfall offen im Griffteil verlaufende Kühlmittelleitung verschließt. Genauso gut ist es möglich, diese Leitung im Normalfall durch ein Ventil abzuschließen, welches wahlweise durch den am Halsteil vorgesehenen Ansatz geöffnet wird.

Aus der FR-A 2 325 353 ist ein zahnärztliches Handstück bekannt, in dem die Kühlmittelleitungen im Gegensatz zur Erfindung nicht verschließbar im Halsteil des Handstückes, sondern im Verbindungsteil zwischen Micromotor und Zuführungsschlauch oder zwischen Micromotor und Handstück angeordnet sind.

Durch die erfindungsgemäße Maßnahme ist es nicht mehr notwendig, den Griffteil des zahnärztlichen Handstückes auszuwechseln, wenn ein Übergang zwischen Halsteilen mit verschiedenem Kühlmittelbedarf erfolgt.

Der erfindungsgemäße Vorschlag erlaubt es vor allem, eine durch den Griffteil geführte Kühlmittelleitung nicht nur an einer fixen Stelle enden zu lassen, sondern für diese Leitung zwei oder mehrere Austrittsstellen vorzusehen, wobei je nach der Art des verwendeten Halsteiles der Kühlmittelstrom in den Halsteil weitergeleitet wird oder nicht.

Aus dem DE-U 85 10 667 ist ein zahnärztliches Handstück bekannt, bei dem der Griffteil einen den Halsteil untergreifenden Arm aufweist, welcher sich über die ganze Länge des Halsteiles erstreckt und an seinem Ende Austrittsöffnungen für Kühlwasser und Kühlluft aufweist. Auch bei einer derartigen Anordnung kann die Erfindung eingesetzt werden, um die Kühlmedien wahlweise durch den Halsteil oder den diese untergreifenden Arme zu leiten.

Einzelheiten der Erfindung werden anschließend anhand der Zeichnung erläutert.

Fig. 1a und b zeigen von der Seite und von oben jeweils im Schnitt den Griffteil eines zahnärztlichen Handstückes,
Fig. 2a - c zeigen mit dem Griffteil nach Fig. 1 verbindbare, jeweils einstückig mit einem Kopfteil ausgeführte Halsteile in Draufsicht, Fig. 3a - c die entsprechenden Seitenansichten, Fig. 4a - c zeigen die Verbindungsstelle von Griffteil und Halsteil entsprechend 2a - c, Fig. 5a - c zeigen eine konstruktive Variante zu Fig. 4a - c, Fig. 5d den zugehörigen Griffteil in der Ausgangsstellung.

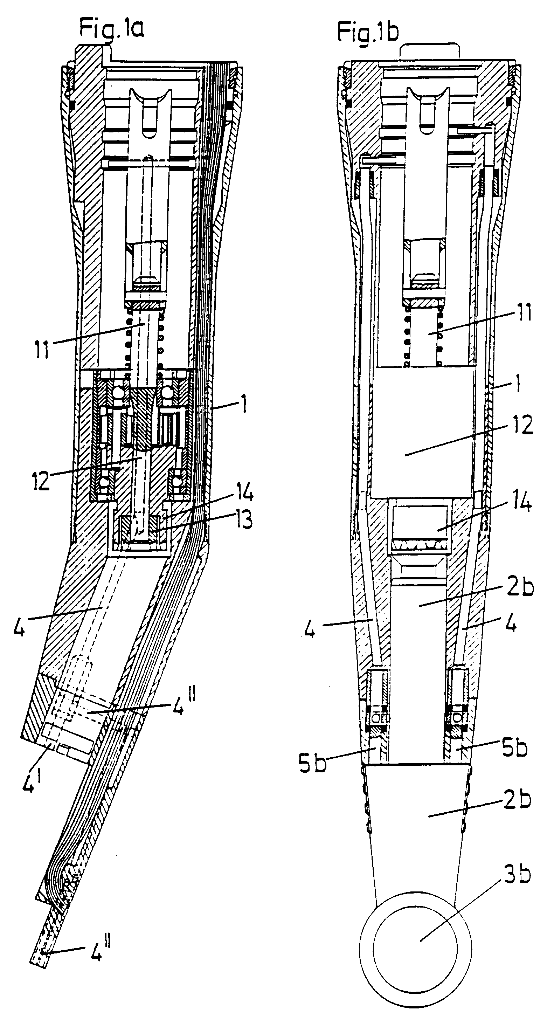

Der Griffteil 1 in Fig. 1a und 1b umfaßt jeweils eine Antriebswelle 11, welche direkt bzw. über ein Getriebe 12 Stirnränder 13 und 14 antreibt, über welche die Drehbewegung an eine Welle in einem aus Halsteil 2b und Kopfteil 3 bestehenden Werkzeugträger vermittelt wird. Durch den Griffteil 1 verläuft eine Kühlmittelleitung 4, welche sich in Zwei Arme verzweigt, von denen der Arm 4' in die Trennebene vom Griffteil 1 und Halsteil 2 endet, wogegen der Arm 4'' bis zum Vorderende des Griffteiles 1 geführt ist, wo aus dem Kühlwasser und ebenfalls zugeführter Kühlluft ein Spray gebildet wird.

Wesentlich für den dargestellten Griffteil 1 ist die Möglichkeit, Werkzeugträger daran anzuschließen, welche in verschiedener Weise mit einem Kühlmedium, insbesondere mit Kühlwasser versorgt werden sollen.

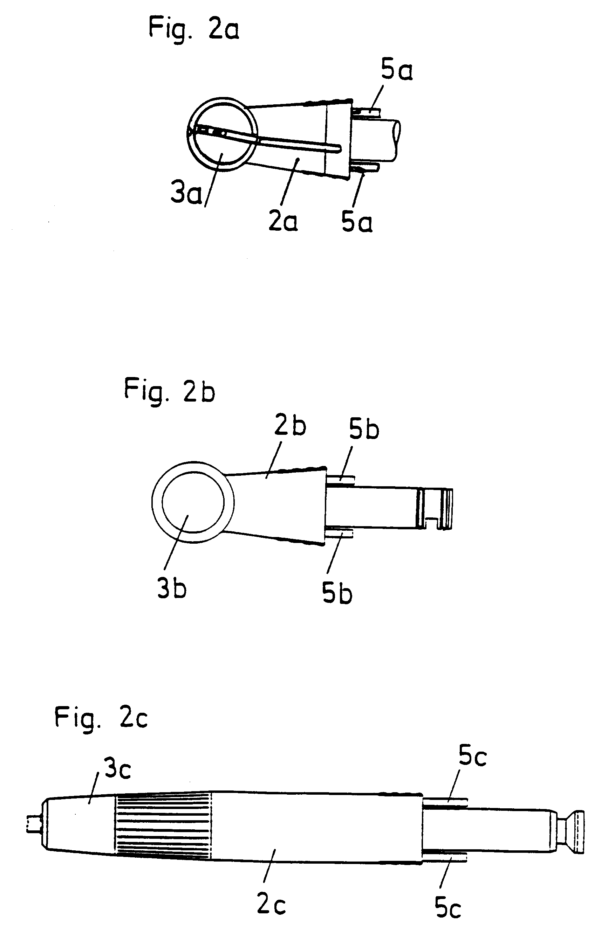

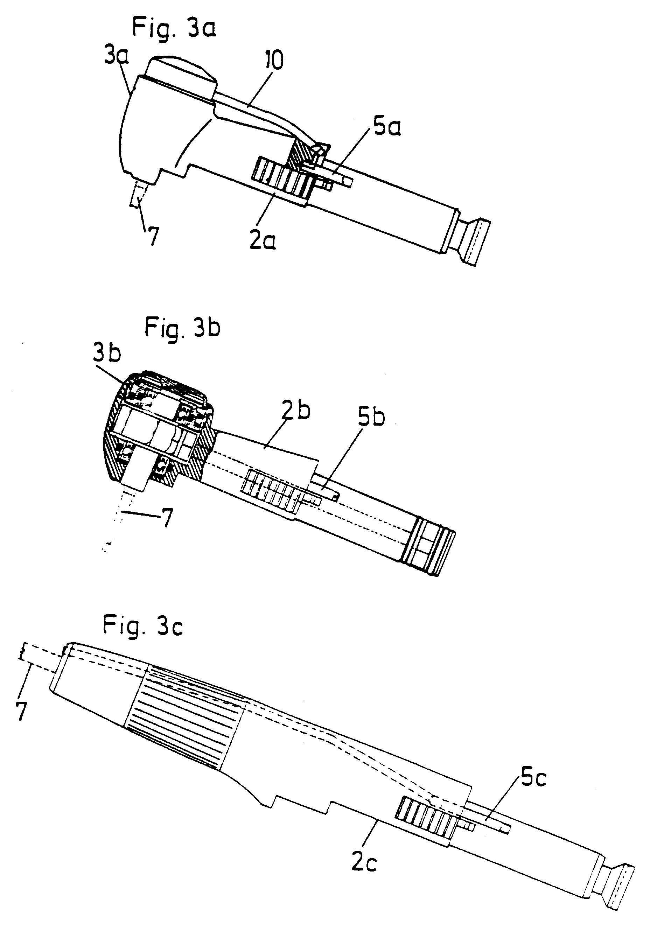

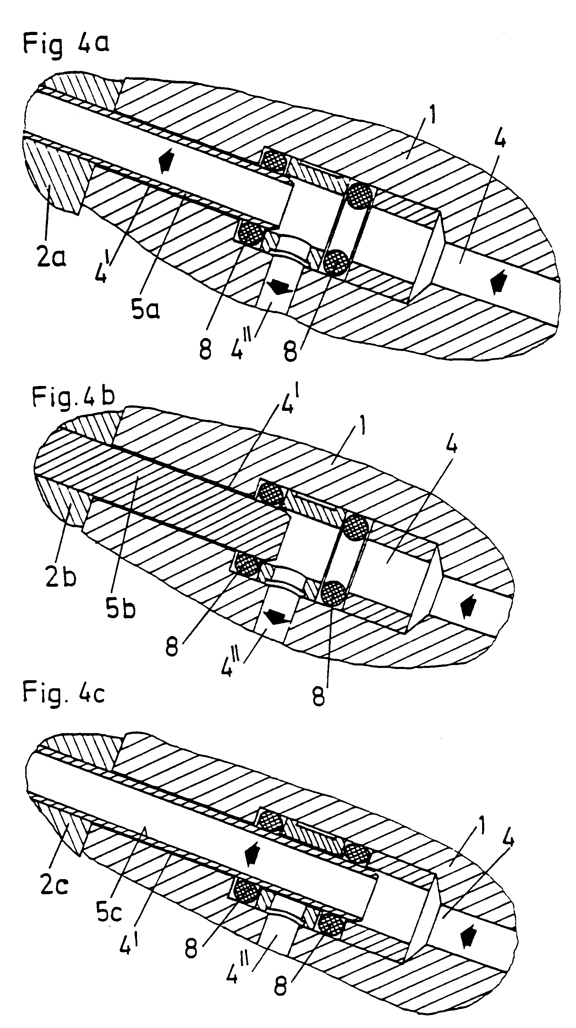

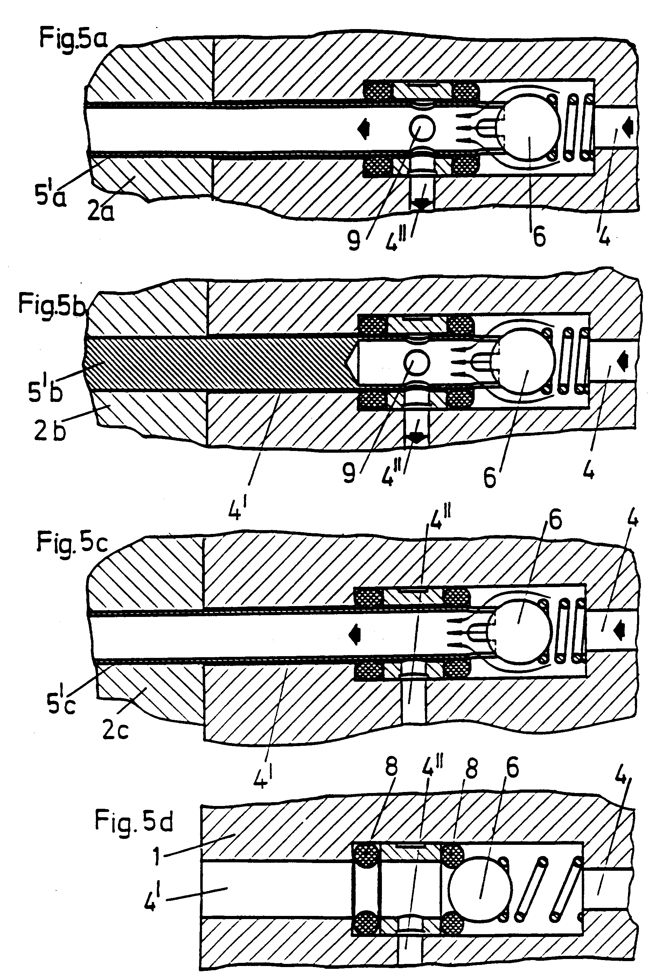

Im Falle des Ausführungsbeispieles nach Fig. 2a bzw. Fig. 3a liegt insofern noch eine konventionelle Lösung vor, als sowohl der Ast 4' als auch der Ast 4'' der Kühlmittelleitung zur Kühlmittelversorgung des Instrumentes beitragen. Die Äste 4' setzen sich in der aus Fig. 4a und 5a im Detail ersichtlichen Weise in das Handstück 2a fort und dienen dazu, über eine Leitung 10 eine Innenkühlung des Werkzeuges 7 zu bewirken. Die Äste 4'' werden in der aus Fig. 1 ersichtlichen Weise zur Bildung eines Kühlsprays an die Spitze des Griffteiles 1 geführt.

Wie aus Fig. 2b und 3b ersichtlich, erlaubt es jedoch die Erfindung, das Kühlmittelangebot des Griffteiles 1 nur teilweise auszunützen, indem durch einen Ansatz 5b der Ast 4' der Kühlmittelleitung verschlossen wird, sodaß lediglich der Spitze des Griffteiles 1 Wasser zur Spraybildung zugeführt wird.

Umgekehrt wie in Fig. 2c und 3c dargestellt, ist es andererseits möglich, das Kühlmittel durch einen gemäß Fig. 4c ausgebildeten Ansatz 5c lediglich in den hier gerade ausgebildeten Halsteil 2c weiterzuleiten, ohne von der Möglichkeit der Spraybildung am Ende des Griffteiles 1 Gebrauch zu machen.

Die einfachste konstruktive Durchführung des Erfindungsgedankens zeigen an sich Fig. 4a - c. Hier sind lediglich an jener Stelle, an der sich die Kühlmittelleitung 4 in die beiden Äste 4' und 4'' teilt, O-Ringe 8 zur Dichtung vorgesehen. Die Ansätze 5 a - c sind entweder stab- oder rohrförmig ausgebildet. Wenn es gewünscht ist, die Kühlmittelleitung 4 grundsätzlich verschlossen zu halten, kann mit der in Fig. 5d dargestellten Konstruktion die gleiche Wirkung erzielt werden, wie mit jener gemäß Fig. 4. Es ist lediglich ein Ventil 6 vorzusehen, welches im Ruhezustand die Kühlmittelleitung 4 verschlossen hält und welches durch geeignete Ansätze 5'a - 5'c der Handstücke 2a - 2c geöffnet wird. Dabei erfolgt im Falle des Ausführungsbeispieles nach Fig. 5a eine Weiterleitung des Kühlmittels einerseits durch den Ansatz 5'a, andererseits über die Bohrungen 9 im Ansatz 5'a über den Ast 4'' der Kühlmittelleitung. Im Fall des Ausführungsbeispieles 5b verschließt der Ansatz 5'b den Ast 4' und öffnet den Zufluß zum Ast 4''. Beim Ausführungsbeispiel gemäß Fig. 5c wird der Ast 4'' geschlossen und der Ast 4' mit Kühlmittel versorgt.

## Patentansprüche

1. Zahnärztliches Handstück bestehend aus einem Griffteil, mit dem wahlweise verschiedene Halsteile verbindbar sind, welche Kopfteile zur Aufnahme von Werkzeugen tragen, wobei durch den Griffteil mindestens eine Kühlmittelleitung geführt ist, dadurch gekennzeichnet, daß der Halsteil (2) mit mindestens einem Ansatz (5b, 5c, 5'a, 5'b, 5'c) zum Verschließen oder Öffnen einer den Griffteil (1) durchsetzenden Kühlmittelleitung (4, 4', 4'') versehen ist.

2. Handstück nach Anspruch 1, dadurch gekennzeichnet, daß die Kühlmittelleitung (4) sich in zwei Äste (4', 4'') verzweigt, welche durch Halsteile (2) mit verschieden gestalteten Ansätzen (5b, 5c, 5'a,5'b,5'c) wahlweise verschließbar bzw. öffenbar sind.

3. Handstück nach Anspruch 2, dadurch gekennzeichnet, daß an jener Stelle, an der sich die Kühlmittelleitung (4,4', 4'') in die beiden Äste (4',4'') teilt, O-ringe (8) zur Dichtung vorgesehen sind.

4. Handstück nach Anspruch 1 oder 2, dadurch gekennzeichnet, daß ein die Kühlmittelleitung (4,4',4'') im Ruhezustand verschließendes Ventil (6) vorgesehen ist, welches vom Ansatz (5'a,5'b,5'c) öffenbar ist.

5. Handstück nach einem der Ansprüche 1 bis 4, dadurch gekennzeichnet, daß ein Halsteil (2) einen stabförmig (5b) ausgebildeten Ansatz aufweist.

6. Handstück nach einem der Ansprüche 1 bis 4, dadurch gekennzeichnet, daß ein Halsteil (2) einen rohrförmig ausgebildeten Ansatz (5a,5c) aufweist.

## Claims

1. A dental handpiece comprising a handle portion to which various neck portions can be alternatively connected, the neck portions carrying head portions for receiving implements, wherein at least one coolant conduit is passed through the handle portion, characterised in that the neck portion (2) is provided with at least one projection (5b, 5c, 5'a, 5'b, 5'c) for closing or opening a coolant conduit (4, 4', 4'') which passes through the handle portion (1).

2. A handpiece according to claim 1 characterised in that the coolant conduit (4) branches into two branches (4', 4'') which can he alternatively closed and opened by neck portions (2) with projections (5b, 5c, 5'a, 5'b, 5'c) of different configurations.

3. A handpiece according to claim 2 characterised in that O-rings (8) are provided for sealing purposes at the location at which the coolant conduit (4, 4', 4'') divides into the two branches (4', 4'').

4. A handpiece according to claim 1 or claim 2 characterised in that there is provided a valve (6) which closes the coolant conduit (4, 4', 4'') in the rest condition and which is openable by the projection (5'a, 5'b, 5'c).

5. A handpiece according to one of claims 1 to 4 characterised in that a neck portion (2) has a projection of a bar-like configuration (5b).

6. A handpiece according to one of claims 1 to 4 characterised in that a neck portion (2) has a projection (5a, 5c) of a tubular configuration.

## Revendications

1. Porte-instruments de dentiste constitué d'un élément poignée, avec lequel peuvent être reliées au choix différentes parties intermédiaires qui portent des parties de tête destinées à recevoir des instruments, l'élément poignée étant traversé par au moins un conduit d'agent de refroidissement, caractérisé en ce que la partie intermédiaire (2) est pourvue d'au moins un prolongement (5b, 5c, 5'a, 5'b, 5'c) destiné à la fermeture ou à l'ouverture d'un conduit d'agent de refroidissement (4, 4', 4'') traversant l'élément poignée (1).

2. Porte-instruments selon la revendication 1, caractérisé en ce que le conduit d'agent de refroidissement (4) se ramifie en deux branches (4', 4'') qui peuvent être fermées ou ouvertes, au choix, par des parties intermédiaires (2) comportant des prolongements (5b, 5c, 5'a, 5'b, 5'c) de différentes formes.

3. Porte-instruments selon la revendication 2, caractérisé en ce qu'à l'endroit où le conduit d'agent de refroidissement (4, 4', 4'') se divise dans les deux branches (4', 4''), il est prévu des joints toriques (8) destinés à assurer l'étanchéité.

4. Porte-instruments selon l'une des revendications 1 ou 2, caractérisé en ce qu'il est prévu un clapet (6) qui ferme le conduit d'agent de refroidissement (4, 4', 4'') à l'état de repos, et qui peut être ouvert par le prolongement (5'a, 5'b, 5'c).

5. Porte-instruments selon l'une quelconque des revendications 1 à 4, caractérisé en ce qu'une partie intermédiaire (2) comporte un prolongement qui est réalisé sur la forme d'une barre (5b).

6. Porte-instruments selon l'une quelconque des revendications 1 à 4, caractérisé en ce qu'une partie intermédiaire (2) comporte un prolongement (5a, 5c) qui est réalisé sous la forme d'un tube.
